(19) Europäisches Patentamt
European Patent Office
Office européen des brevets

(11) Numéro de publication: **0 080 928**
**B1**

(12) **FASCICULE DE BREVET EUROPEEN**

(45) Date de publication du fascicule du brevet: **20.11.86**

(51) Int. Cl.$^4$: **C 08 L 95/00**

(21) Numéro de dépôt: **82402123.2**

(22) Date de dépôt: **22.11.82**

(54) **Emulsions cationiques de liants bitumineux du type bitume-polymère et procédé pour leur préparation.**

(30) Priorité: **27.11.81 FR 8122275**

(43) Date de publication de la demande:
**08.06.83 Bulletin 83/23**

(45) Mention de la délivrance du brevet:
**20.11.86 Bulletin 86/47**

(84) Etats contractants désignés:
**AT CH DE GB LI NL SE**

(56) Documents cités:
**FR-A-1 266 909**
**GB-A- 792 648**
**GB-A- 869 530**

(73) Titulaire: **ELF FRANCE Société Anonyme dite:**
**137, Rue de l'Université**
**F-75340 Paris Cedex 07 (FR)**

(72) Inventeur: **Demangeon, Francis**
**5, Allée de la Source**
**F-69570 Dardilly (FR)**
Inventeur: **Hagenbach, Germain**
**Le Cornevent**
**F-69390 Vernaison (FR)**
Inventeur: **Maldonado, Paul**
**23, Avenue du 8 Mai 1945**
**F-59360 Saint-Symphorien d'Ozon (FR)**

(74) Mandataire: **Boillot, Marc**
**SOCIETE NATIONALE ELF AQUITAINE Division**
**Propriété Industrielle Tour Elf**
**F-92078 Paris la Défense Cédex 45 (FR)**

**EP 0 080 928 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La présente invention concerne des émulsions cationiques de liants bitumineux du type "bitume-polymère", pour lesquelles la tenue au vieillissement du liant est substantiellement améliorée.

La mise en émulsion cationique ou anionique des liants bitumineux est une technique bien connue. L'émulsion consiste en une dispersion de fins globules du liant dans une phase aqueuse continue. L'émulsion est dite anionique lorsque son pH est supérieur à 7 et cationique lorsque son pH est au plus égal à 7.

La mise en émulsion des liants bitumineux fait appel à des agents émulsifiants qui favorisent la dispersion des globules de liant dans la phase aqueuse et évitent leur agglomération.

Dans le cas d'émulsions anioniques, l'agent émulsifiant est du type anionique et consiste notamment en un sel alcalin d'acide gras. L'acide gras est un général mélangé au liant bitumineux en quantités variant de 0,05 à 2% en poids. Le liant ainsi additivé est dispersé dans une phase aqueuse constitué d'eau sodée par passage dans un émulsionneur.

Dans le cas d'émulsions cationiques, l'agent émulsifiant est du type cationique et consiste, par exemple, en une amine grasse, une amidoamine grasse ou encore une imidazoline. L'agent émulsifiant est généralement associé à un acide, qui peut être un acide minéral tel que l'acide chlorhydrique ou un acide organique du type acide carboxylique tel que l'acide acétique ou l'acide formique (cf. par exemple GB—A—792 648 et FR—A—1266 909). Toutefois l'emploi d'un acide tel que l'acide acétique entraîne fréquemment une corrosion des cuves de stockage de l'émulsion produite.

En pratique l'agent émulsifiant est généralement associé à l'acide chlorhydrique, qui réunit les conditions de donner des résultats acceptables et d'être aisément accessible à un coût réduit, et pour préparer l'émulsion ledit agent émulsifiant est dispersé dans de l'eau à laquelle on ajoute de l'acide chlorhydrique. Le chlorhydrate qui se forme est soluble dans l'eau. Cette solution homogène, dont le pH est généralement compris entre 1 et 5, est alors mise en contact avec le liant bitumineux dans un émulsionneur pour former l'émulsion.

L'émulsion, qu'elle soit cationique ou anionique, est considérée comme un moyen permettant d'abaisser la viscosité des liants bitumineux. L'émulsion restitue après rupture le liant bitumineux initial additivé de l'émulsifiant mis en oeuvre pour la fabrication de l'émulsion. La présence de cet émulsifiant dans le liant bitumineux est réputée exercer un effet favorable sur l'adhésivité du liant aux granulats avec lesquels il entre en contact.

On sait que les liants bitumineux constitués uniquement de bitume sont souvent remplacés par des liants bitumineux du type bitume polymère. Ces liants bitume-polymère sont des produits obtenus à partir de bitumes additionnés de polymères et éventuellement modifiés par ces derniers en présence ou non d'un réactif comme le soufre ou autre agent modificateur, et d'un adjuvant.

Dex exemples de liants bitumineux du type bitume-polymère comprennent notamment:

— des bitumes modifiés par des polymères oléfiniques ou par des mélanges d'acides gras et d'alcools supérieurs (Brevat français No. 76 27936 (Publication No. 2.364.960) du 17-9-76);
— des bitumes modifiés comme précédemment sur lesquels sont greffés des élastomères (Brevet français No. 76 27937 (Publication No. 2.364.961) du 17-9-76);
— des bitumes modifiés par le norbornène (Brevet français No. 76 30316 (Publication No. 2.367.102) du 8-10-76);
— des bitumes modifiés par des dihalogénopolybutadiènes servant de structure d'accueil à des copolymères séquencés et à des élastomères co-vulcanisables (Brevet français No. 78 06160 (Publication No. 2.418,812) du 3-3-78);
— des bitumes modifiés par des copolymères blocs styrène/butadiène ou styrène/isoprène (Brevet français No. 76 39233 (Publication No. 2.376.188) du 28-12-76);
— des bitumes modifiés par des copolymères blocs polystyrène/polydiène carboxylé (Addition No. 78 31689) (Publication No. 2.440,967) du 9-11-78 au Brevet français No. 76 39233);
— des bitumes modifiés par des cires de polyéthylène (Brevet français No. 77 29953 (Publication No. 2.405,288) du 5-10-77);
— des bitumes modifiés par des polymères acryliques élastomères (Brevet français No. 78 12135 (Publication No. 2.424.301) du 25-4-78);
— des compositions bitumineuses obtenues par mise en contact de bitume avec une solution-mère contenant des copolymères blocs styrène/butadiène et du soufre (Brevet français No. 78 18534 (Publication No. 2.429.241) du 21-6-78) ou autre agent réactif, ainsi qu'une coupe pétrolière ou une huile de houille;
— des bitumes modifiés par des copolymères éthylène/acétate de vinyle.

Lorsque l'on prépare des émulsions cationiques de liants bitumineux pour lesquelles ledit liant est du type bitume-polymère, en faisant appel à l'acide préconisé dans la pratique, c'est-à-dire à HCl, on constate que le transit par la forme émulsion modifie le comportement au vieillissement du liant bitume-polymère, qui s'avère, dans ce cas, être moins bon que celui du même liant bitume-polymère n'ayant pas transité par l'émulsion.

On peut mettre en évidence cette différence de tenue au vieillissement par analyse des caractéristiques du liant bitume-polymère avant et après l'avoir soumis à l'essai dit "Rolling Film Oven Test" (en abrégé "essai RTFO") défini dans la norme ASTM D 2872, modifié pour porter la durée du traitement à la chaleur à 150 minutes. Lorsque le liant transite par la forme émulsion, on procède d'abord à une rupture de l'émulsion et à son séchage par évaporation de l'eau. Ceci est réalisé par répandage de l'émulsion sur une plaque métallique sous la forme d'un film de 2 mm d'épaisseur, puis séchage par évaporation de l'eau à 50°C pendant 4 heures.

La dégradation de la tenue au vieillissement des liants bitumineux du type bitume-polymère, après transit par la forme émulsion renfermant HCl, a été observée, quelle que soit la nature chimique de l'émulsifiant cationique utilisé et notamment amine grasse, alcoylamidoamine, imidazoline, pour les divers liants bitume-polymère cités précédemment, et en particulier pour les liants bitume-polymère choisis parmi les mélanges d'une solution mère contenant le polymère et un réactif, par exemple soufre, avec in bitume, les mélanges de bitumes avec des copolymères blocs styrène/butadiène/styrène (en abrégé SBS), les mélanges de bitumes avec des copolymères éthylène/acétate de vinyle, ou encore les mélanges émulsion de bitume/émulsion de latex.

On a trouvé que l'on pouvait éviter l'influence néfaste du transit par la forme émulsion sur le vieillissement des liants bitume-polymère en mettant en oeuvre des émulsions cationiques dans lesquelles l'acide utilisé est un acide polycarboxylique, un tel acide n'entraînant en outre aucune corrosion.

Les émulsions cationiques de liants bitumineux suivant l'invention sont du type consistant en une phase organique formée d'un liant bitumineux dispersée dans une phase aqueuse renfermant un agent émulsifiant cationique et un acide, et se caractérisent en ce que le liant bitumineux est un liant du type bitume-polymère et que l'acide présent dans la phase aqueuse est un acide polycarboxylique éventuellement hydroxylé utilisé en quantité telle que le pH de ladite phase aqueuse ait une valeur comprise entre 1 et 7.

Par liant bitumineux du type bitume-polymère, on entend suivant l'invention l'un quelconque des produits obtenus à partir de bitumes additionnés de polymères et éventuellement modifiés par ces derniers en présence ou non d'un réactif comme le soufre ou autre agent modificateur tel qu'agent de couplage ou agent de vulcanisation, et éventuellement d'un adjuvant tel que coupe pétrolière ou huile de houille.

Des liants bitumineux préférés du type bitume-polymère utilisables pour constituer les émulsions cationiques suivant l'invention sont choisis parmi les divers bitumes modifiés par des polymères qui ont été cités précédemment à titre d'exemples.

Les acides polycarboxyliques employés dans les émulsions cationiques de l'invention peuvent être choisis parmi les acides polycarboxyliques saturés ou insaturés, et éventuellement hydroxylés, aliphatiques en $C_2$ à $C_{20}$, et de préférence en $C_2$ à $C_{12}$, alicycliques en $C_5$ à $C_{12}$ ou aromatiques en $C_8$ à $C_{12}$, lesdits acides étant en particulier des acides di- ou tricarboxyliques, éventuellement hydroxylés.

Parmi les acides polycarboxyliques, éventuellement hydroxylés, du type aliphatique saturés ou insaturés en $C_2$ à $C_{20}$, on peut citer, à titre d'exemples non limitatifs, les acides dicarboxyliques tels que l'acide oxalique, l'acide malonique, l'acide succinique, l'acide glutarique, l'acide adipique, l'acide pimélique, l'acide malique, l'acide tartrique, l'acide maléique, l'acide fumarique, l'acide mésaconique, l'acide itaconique, les acides tricarboxyliques tels que l'acide butane tricarboxylique, l'acide citrique. Des exemples d'acides carboxyliques alicycliques ou aromatiques di- ou tricarboxyliques du type précité sont tels que l'acide hexahydrophtalique et les acides phtaliques. Un groupe d'acides préférés comporte les acides oxalique, succinique, phtaliques, tartrique, citrique, et maléique.

L'agent émulsifiant cationique peut être l'un quelconque des agents émulsifiants cationiques connus. Cet agent est plus particulièrement choisi dans le groupe des amines aliphatiques, notamment amines grasses, des imides, des alcoylamidoamines, et des imidazolines. En particulier, on peut utiliser des émulsifiants du type N-alcoylpolyamine de formule générale

$$R—NH\!-\!\!\left(C_mH_{2m}—NH\right)_p\!-\!\left(C_nH_{2n}\right)\!-\!NH_2$$

ou encore du type amidoamine de formule générale

$$R—\underset{\displaystyle \overset{\|}{O}}{C}NH—\left(C_mH_{2m}—NH\right)_p\!-\!\left(C_nH_{2n}\right)\!-\!NH_2$$

dans lesquelles R est un radical aliphatique en $C_1$ à $C_{20}$, et de préférence en $C_8$ à $C_{20}$, m et n sont des nombres entiers allant de 1 à 8, et de préférence de 1 à 6, et p est un nombre entier allant de 0 à 6, et en particulier de 0 à 3. Des agents émulsifiants préférés ont les formules suivantes

$$R'—NH—(CH_2)_3—NH_2,$$

$$R'NH—CH(C_2H_5)—CH_2—CH_2NH_2,$$

$$R'—CONH—(CH_2)_3—NH_2, \text{ et}$$

$$R'—NH—(CH_2)_3—NH—(CH_2)_3—NH_2,$$

dans lesquelles R′ est un radical aliphatique en $C_{12}$ à $C_{20}$, ledit radical étant en particulier un radical stéaryle ou oléyle.

La quantité d'agent émulsifiant peut varier dans de larges limites. Elle peut représenter avantageusement 0,03% à 0,6% en poids de l'émulsion.

Les émulsions cationiques suivant l'invention sont préparées en réalisant, dans une zone de formation d'émulsion et notamment dans un appareil du type émulsionneur, une dispersion intime du liant bitumineux bitume-polymère dans une solution aqueuse du carboxylate de l'agent émulsifiant renfermant suffisamment d'acide carboxylique libre pour avoir un pH compris entre 1 et 7. Pour ce faire, on amène, simultanément et séparément, à la zone de formation d'émulsion d'une part le liant bitumineux bitume-polymère sous la forme d'une masse fondue ayant une température comprise entre 80°C et 180°C, et de préférence entre 120°C et 160°C, et d'autre part la solution aqueuse acide de carboxylate de l'agent émulsifiant ayant une température comprise entre 15°C et 80°C, et de préférence entre 20°C et 60°C, et l'on maintient l'ensemble dans ladite zone pendant un temps suffisiant pour former une émulsion.

Pour préparer la solution aqueuse acide du carboxylate de l'agent émulsifiant ayant un pH compris entre 1 et 7, l'acide carboxylique, sout à l'état solide ou encore sous la forme d'une solution aqueuse, est ajouté en quantité contrôlée à la solution ou à la dispersion aqueuse de l'agent émulsifiant pour former le carboxylate de l'agent émulsifiant, qui est soluble dans l'eau, et conserver dans la solution aqueuse de carboxylate une proportion suffisante d'acide libre pour amener le pH de ladite solution aqueuse à la valeur désirée entre 1 et 7.

La solution aqueuse acide de carboxylate d'émulsifiant et le liant bitumineux bitume-polymère sont amenés à la zone de formation d'émulsion en proportions telles que l'émulsion résultante renferme avantageusement, en poids, 30 à 80%, et de préférence 55 à 75%, du liant bitumineux bitume-polymère.

L'émulsion obtenue conduit, après rupture, à un liant bitume-polymère dont le comportement au vieillissement est identique à celui du liant bitume-polymère qui n'a pas transité par la forme émulsion.

L'invention est illustrée par les exemples suivants donnés à titre non limitatif.

Dans ces exemples, sauf indication contraire, les proportions et pourcentages sont définis en poids.

Les exemples 1 à 3, dont les résultats sont donnés dans le Tableau I, sont des exemples témoins ayant pour but d'illustrer la différence de tenue au vieillissement de liants bitumineux bitume-polymère ayant transité par la forme émulsion.

Exemple 1

Le liant bitumineux bitume-polymère est une formulation d'un liant pour enduits superficiels, telle que décrite dans le brevet français No. 78 18534 (Publication No. 2429241).

Ce liant est constitué par mélange d'un bitume avec une solution mère contenant le polymère et un réactif. Ce mélange est ensuite porté à une température suffisamment élevée pour déclencher la réaction entre le réactif, le polymère, et le bitume. On désigne par réactif le soufre ou un agent de couplage ou de vulcanisation.

La solution mère utilisée dans cet exemple est constituée d'une coupe pétrolière et plus précisément d'une coupe appelée "Light Cycle Oil", obtenue en raffinerie après craquage catalytique des distillats lourds, cette coupe, essentiellement aromatique, ayant un intervalle de distillation de l'ordre de 180°C à 360°C. Le polymère utilisé dans cet exemple est un copolymère séquencé styrène/butadiène contenant 25% de styrène, dont 18% de polystyrène bloc, et 75% de polybutadiène.

Vingt parties de ce polymère sont dissoutes dans 80 parties de la coupe pétrolière à une température comprise entre 80°C et 100°C. Après complète dissolution du polymère, on ajoute 0,6 partie de soufre à la solution. Quinze parties de la solution ainsi préparée sont mélangées à 85 parties d'un bitume routier de pénétration 80/100. Le mélange est porté à une température comprise entre 170°C et 180°C pendant environ 1h30. On obtient ainsi un liant bitume-polymère fluidifié dont les principales caractéristiques sont indiquées à la ligne 1 du tableau I.

Le liant bitume-polymère décrit dans cet exemple est soumis à l'essai de vieillissement RTFO (ASTM D 2872/70) pendant une durée de 150 minutes. Le produit récupéré est analysé. Les résultats sont regroupés à la ligne 2 du tableau I.

Le bitume-polymère de cet exemple est ensuite mis en émulsion cationique. A cet effet on prépare une dispersion dans l'eau de 0,2% d'une amine grasse, consistant en un mélange, en proportions molaires sensiblement égales, de stéaryl et d'oléyl propane diamine-1,3 de formule

$$R'-NH-(CH_2)_3-NH_2$$

avec R' désignant un radical stéaryle ou oléyle. L'amine grasse est acidifiée par HCl (d=1,16) en quantité suffisante pour abraisser le pH de la dispersion à la valeur 2. L'addition d'HCl conduit à la formation du chlorhydrate de l'amine qui est soluble dans l'eau.

Dans un émulsionneur, on introduit simultanément 350 parties de la solution de chlorhydrate portée à 40°C et 650 parties du liant bitume-polymère portées à 150°C. On obtient ainsi 1000 parties d'une émulsion cationique du liant bitume-polymère.

Cette émulsion est étalée en un film de 2 mm d'épaisseur sur une plaque métallique et portée à 50°C pendant 4 heures dans une étuve ventilée. Le liant bitume-polymère résiduel est récupéré et analysé. Les résultats figurent à la ligne 3 du tableau I. On constate, en comparant cette ligne à la ligne n° 1, que le transit par la forme émulsion ne modifie pas les caractéristiques initiales du liant.

Le bitume-polymère récupéré est soumis à l'essai de vieillissement RTFO pendant une durée de 150 mm, puis analysé. Les résultants figurent à la ligne 4 du tableau I.

On constate que les propriétés, comme la pénétration, le point de ramollissement et le point de Fraass, n'ont pas été affectées par le transit par la forme émulsion (comparaison des lignes 2 et 4 du tableau I). La différence apparaît cependant dans l'essai de traction, qui met en évidence une perte importante d'élasticité comme l'indique la chute à zéro de la valeur de la contrainte à la rupture, qui était de $0,68 \times 10^5$ Pascals, ainsi que l'apparition de la rupture à 800% d'allongement.

Exemple 2

Le même liant bitume-polymère que celui utilisé dans l'exemple 1 est mis en émulsion cationique en utilisant comme émulsifiant une alcoylamidoamine consistant en un mélange en proportions molaires sensiblement égales de stéarylamidoamine et d'oléylamidoamine de formule

$$R'-\underset{\underset{O}{\|}}{C}-NH-(CH_2)_3-NH_2$$

dans laquelle R' désigne un radical stéaryl ou oléyle. Cet émulsifiant est employé à raison de 1,8 g par kilo d'émulsion, les autres conditions étant indentiques à celles décrites dans l'exemple 1.

Le liant bitume-polymère obtenu après rupture et séchage de l'émulsion présentes les caractéristiques indiquées à la ligne 5 du tableau I. Après avoir été soumis à l'essai de vieillissement RTFO, il présente les caractéristiques indiquées à la ligne 6 du tableau I. La perte d'élasticité traduite par la valeur zéro de la contrainte à la rupture est identique à celle observée dans l'exemple décrit à la ligne 4 du tableau I.

Exemple 3

L'influence du transit par la forme émulsion sur la tenue au vieillissement des liants bitume-polymère à également été mise en évidence dans le cas de liants bitume-polymère autres que celui décrit dans l'exemple I.

La ligne 7 du tableau I fournit des résultats obtenus après vieillissement RTFO d'un mélange de bitume (pénétration 80/100) avec 3% d'un copolymère triséquencé styrène/butadiène/styrène, après transit du mélange par la forme émulsion dans une formulation analogue à celle décrite dans l'exemple 1.

TABLEAU I

$\nabla_s$ - contrainte au seuil
$\nabla_r$ - contrainte à la rupture

$\varepsilon_s$ = allongement au seuil
$\varepsilon_r$ = allongement à la rupture

| Nature du bitume-polymère et traitement subi | Penetration à 25 C NF T 66.004 (1/10 mm) | Point de ramollissement NF T 66.008 ( C) | Point de Fraass IP 80/58 ( C) | Viscosité à 160 C (poises) (0,1 Pa · s) | Pseudo viscosité a 50 C, orifice 10 mm NF T 66.005 (secondes) | Essai de traction | | | | | |
|---|---|---|---|---|---|---|---|---|---|---|---|
| | | | | | | T ( C) | Vitesse (mm/mn) | $\nabla_s$ (Pascals) | $\nabla_r$ (Pascals) | $\varepsilon_s$ % | $\varepsilon_r$ % |
| Bitume-polymère de l'exemple 1 | | | | 0,89 | 115 | 10 | 500 | $5,7 \cdot 10^5$ | $1,07 \times 10^5$ | 20 | 900 |
| Bitume-polymère de l'exemple 1 soumis au test RTFO pendant 150 mn | 57 | 58 | -17 | | | 20 | 500 | $1,72 \cdot 10^5$ | $0,68 \times 10^5$ | 25 | 900 |
| Bitume-polymère de l'exemple 1 après transit par l'émulsion cationique puis rupture et séchage de l'émulsion | | | | 0,92 | 116 | 10 | 500 | $5,7 \cdot 10^5$ | $1,1 \cdot 10^5$ | 20 | 900 |
| Bitume-polymère précédent soumis au test RTFO pendant 150 mn | 54 | 59 | -19 | | | 20 | 500 | $2,07 \cdot 10^5$ | 0 | 25 | 800 |
| Bitume-polymère de l'exemple 2 après transit par l'émulsion cationique puis rupture et séchage de l'émulsion | | | | 0,90 | 113 | 10 | 500 | $5,5 \cdot 10^5$ | $1,05 \cdot 10^5$ | 20 | 900 |
| Bitume polymère précédent soumis au test RTFO pendant 150 mn | 60 | 57 | 20 | | | 20 | 500 | $1,05 \cdot 10^5$ | 0 | 30 | 700 |
| Bitume polymère SBS après transit par l'émulsion cationique et vieillissement par RTFO pendant 150 mn | 64 | 57 | 18 | | | 20 | 500 | $1,96 \cdot 10^5$ | $0,02 \cdot 10^5$ | 25 | 800 |

Exemple 4

Dans cet exemple suivant l'invention, on fabrique un liant bitume-polymère en dispersant, par agitation pendant environ 1 heure, 50 parties de copolymère éthylène/acétate de vinyle, à 45% d'acétate de vinyle, dans 950 parties de bitume routier (pénétration 60/70) porté à 180°C. La solution homogène ainsi obtenue est fluidifiée par addition de 10% d'une huile de houille anthracénique de type 200/300.

Ce produit est alors mis en émulsion cationique avec une solution aqueuse d'un oxalate d'amine grasse. Cette solution aqueuse est préparée en ajoutant à 700 parties d'eau, 4 parties de l'amine de formule

$$R'—NH—(CH_2)_3—NH—(CH_2)_3—NH_2$$

dans laquelle R' est un radical stéaryle, et 5 parties d'acide oxalique solide. Quelques minutes d'agitation à environ 50°C conduisent à une solution homogène de l'oxalate de l'amine. Le pH de cette solution est d'environ 1,8.

350 parties de la solution d'oxalate d'amine sont mélangées à 650 parties du liant bitume-polymère précédemment préparé en suivant pour ce mélange un mode opératoire analogue à celui indiqué dans les exemples 1 et 2.

Le liant bitume-polymère de cet exemple est soumis à l'essai de vieillissement RTFO décrit dans les exemples précédents. Il conduit à un produit vieilli dont les caractéristiques sont indiquées à la ligne 1 du tableau II.

L'émulsion oxalique du liant bitume-polymère après rupture et séchage conduit à un liant qui est également soumis au même essai de vieillissement. Les caractéristiques du produit obtenu à l'issue de l'essai sont données à la ligne 2 du tableau II. Ces caractéristiques peuvent être considérées comme identiques à celles données à la ligne 1 du tableau II.

TABLEAU II

| Nature du bitume-polymère et traitement subi | Pénétration à 25 C NF T 66.004 (1/10 mm) | Point de ramollissement NF T 66.008 ( C) | Point de Fraass IP 80/53 ( C) | Viscosité à 160 C (poises) (0,1 Pa · s) | Pseudo viscosité à 50 C, orifice 10 mm NF T 66.005 (secondes) | Essai de traction | | | | | |
|---|---|---|---|---|---|---|---|---|---|---|---|
| | | | | | | T ( C) | Vitesse (mm/mn) | $\nabla_s$ (Pascals) | $\nabla_r$ (Pascals) | $\varepsilon_s$ % | $\varepsilon_r$ % |
| Bitume-polymère de l'exemple 4 soumis au test de vieillissement RTFO pendant 150 mn | 45 | 61 | −12 | | | 20 | 500 | $3{,}1 \cdot 10^5$ | $0{,}15 \cdot 10^5$ | 20 | 900 |
| Bitume-polymère de l'exemple 4 après transit par l'émulsion oxalique, puis vieillissement du liant par le test RTFO | 47 | 60 | 13 | | | 20 | 500 | $2{,}9 \cdot 10^5$ | $0{,}1 \cdot 10^5$ | 20 | 900 |

Exemple 5

Dans cet exemple suivant l'invention, on disperse 2 parties de l'amine grasse utilisée dans l'exemple 1 dans 346 parties d'eau. Cette dispersion est portée à 40°C, pui on y ajoute 2 parties d'acide maléïque pur de qualité technique. Après agitation on obtient une solution limpide dont le pH est égal à 2,05.

Dans un émulsionneur on introduit simultanément 350 parties de la solution ainsi obtenue portée à 40°C et 650 parties d'un liant bitume-polymère identique à celui utilisé dans l'exemple 1, ledit liant étant porté à 150°C. On obtient 1000 parties d'une émulsion cationique du liant bitume-polymère.

Cette émulsion est ensuite rompue et séchée en film de 2 mm d'épaisseur dans des conditions analogues à celles de l'exemple 1. Le liant bitume-polymère résiduel est récupéré et analysé.

Les résultats figurent à la ligne 3 du tableau III. On constate, en comparant cette ligne à la ligne 1, que le transit par la forme émulsion ne modifie pas les caractéristiques initiales du liant.

Le liant bitume-polymère récupéré après rupture de l'émulsion est soumis à l'essai de vieillissement RTFO puis analysé. Les résultats sont donnés à la ligne 4 du tableau III. On constate que l'ensemble des propriétés du produit àpres vieillissement sont identiques à celles du produit n'ayant pas transité par la forme émulsion (comparaison des lignes 4 et 2 du tableau III).

TABLEAU III

| Nature du bitume-polymère et traitement subi | Pénetration à 25 C NF T 66.004 (1/10 mm) | Point de ramollissement NF T 66.008 (C) | Point de Fraass IP 80/58 (°C) | Viscosité à 160°C (poises) (0,1Pa.s) | Pseudo viscosité à 50°C, orifice 10 mm NF T 66.005 (secondes) | Essai de traction | | | | | |
|---|---|---|---|---|---|---|---|---|---|---|---|
| | | | | | | T (C) | Vitesse (mm/mn) | $\overline{V_s}$ (Pascals) | $\overline{V_r}$ (Pascals) | $\varepsilon_s$ % | $\varepsilon_r$ % |
| Bitume-polymère de l'exemple 1 | | | | 0,89 | 115 | -10 | 500 | $5,7 \times 10^5$ | $1,07 \times 10^5$ | 20 | >900 |
| Bitume-polymère de l'exemple 1 soumis au test RTFO pendant 150 mn | 57 | 58 | -17 | | | 20 | 500 | $1,72 \times 10^5$ | $0,68 \times 10^5$ | 25 | >900 |
| Bitume-polymère de l'exemple 1 après transit par l'émulsion cationique puis rupture et séchage de l'émulsion conformément à l'exemple 5 | | | | 0,90 | 113 | -10 | 500 | $5,6 \times 10^5$ | $1 \times 10^5$ | 20 | >900 |
| Bitume-polymère précédent soumis au test RTFO pendant 150 mn | 55 | 60 | -18 | | | 20 | 500 | $1,95 \times 10^5$ | $0,6 \times 10^5$ | 25 | >900 |
| Bitume-polymère de l'exemple 1 après transit par l'émulsion cationique utilisant l'acide citrique puis rupture et séchage de l'emulsion conformement à l'exemple 6 | | | | 0,92 | 110 | -10 | 500 | $5,5 \times 10^5$ | $0,98 \times 10^5$ | 25 | >900 |
| Bitume-polymère précédent soumis au test RTFO pendant 150 mn | 57 | 59 | 18 | | | 20 | 500 | $1,8 \times 10^5$ | $0,65 \times 10^5$ | 25 | >900 |

Exemple 6

Dans cet exemple suivant l'invention, on disperse 2 parties de l'amine grasse utilisée dans l'exemple 1 dans 346 parties d'eau. Cette dispersion est portée à 40°C, puis on y ajoute 2,2 parties d'acide citrique pur de qualité technique. Après agitation on obtient une solution dont le pH est égal à 2,9.

Dans un émulsionneur on introduit simultanément 350 parties de la solution aqueuse obtenue portée à 40°C et 650 parties d'un liant bitume-polymère identique à celui utilisé dans l'exemple 1, ledit liant étant porté à 140°C. On obtient de la sorte 1000 parties d'une émulsion cationique de bitume-polymère.

Cette émulsion est ensuite rompue et séchée en film de 2 mm d'épaisseur dans des conditions analogues à celles de l'exemple 1. Le liant bitume-polymère résiduel est récupéré et analysé.

Les résultats figurent à la ligne 5 du tableau III. On constate, en comparant cette ligne à la ligne 1, que le transit par la forme émulsion ne modifie pas les caractéristiques initiales du liant.

Le liant bitume-polymère récupéré après rupture de l'émulsion est soumis à l'essai de vieillissement RTFO, puis analysé. Les résultats sont fournis à la ligne 6 du tableau III. On constate que les propriétés du produit après vieillissement sont identiques à celles du produit n'ayant pas transité par la forme émulsion.

**Revendications**

1. Emulsions cationiques de liants bitumineux du type consistant en une phase organique formée d'un liant bitumineux dispersée dans une phase aqueuse renfermant un agent émulsifiant cationique et un acide, caractérisées en ce que le liant bitumineux est un liant du type bitume-polymère et que l'acide présent dans la phase aqueuse est un acide polycarboxylique, éventuellement hydroxyle, utilisé en quantité telles que le pH de ladite phase aqueuse ait une valeur comprise entre 1 et 7.

2. Emulsions suivant la revendication 2, caractérisées en ce que l'acide carboxylique est choisi parmi les acides polycarboxyliques saturés ou insaturés, et éventuellement hydroxylés, aliphatiques en $C_2$ à $C_{20}$, et de préférence en $C_2$ à $C_{12}$, alicycliques en $C_5$ à $C_{12}$ ou aromatiques en $C_8$ à $C_{12}$.

3. Emulsions suivant la revendication 2, caractérisées en ce que l'acide carboxylique est un acide di- ou tricarboxylique, éventuellement hydroxylé.

4. Emulsions suivant l'une des revendications 1 à 3, caractérisées en ce que l'agent émulsifiant est choisi parmi les amines aliphatiques, les imides, les alcoylamidoamines, et les imidazolines.

5. Emulsions suivant la revendication 4, caractérisées en ce que l'agent émulsifiant cationique répond à l'une des formules générale

$$R—NH+C_mH_{2m}—NH+_p+C_nH_{2n}+NH_2 \text{ ou}$$

$$R—CONH+C_mH_{2m}—NH+_p+C_nH_{2n}+NH_2,$$

dans lesquelles R est un radical aliphatique en $C_1$ à $C_{20}$, et de préférence en $C_8$ à $C_{20}$, m et n sont des nombres entiers allant de 1 à 8, et de préférence de 1 à 6, et p est un nombre entier allant de 0 à 6, et de préférence de 0 à 3.

6. Emulsions suivant l'une des revendications 1 à 5, caractérisées en ce que la quantité d'agent émulsifiant représente 0,03 à 0,6% du poids de l'émulsion.

7. Emulsions suivant l'une des revendications 1 à 6, caractérisées en ce que le liant bitumineux bitume-polymère est choisi parmi les bitumes additionnés de polymères et éventuellement modifiés par ces derniers en présence ou non d'un réactif, notamment soufre, agent de couplage ou agent de vulcanisation, et éventuellement d'un adjuvant tel que coupe pétrolière ou huile de houille.

8. Emulsions suivant la revendication 7, caractérisées en ce que le liant bitumineux bitume-polymère est choisi dans le groupe formé par les bitumes modifiés par des polymères oléfiniques ou par des mélanges d'acides gras et d'alcools supérieurs et éventuellement greffés par des élastomères, les bitumes modifiés par le norbornène, les bitumes modifiés par des dihalogénopolybutadiènes servant de structure d'accueil à des copolymères séquences et à des élastomères covulcanisables, les bitumes modifiés par des copolymères blocs polystyrène/polydiène ou polystyrène/polydiène carboxylé, les bitumes modifiés par des cires de polyéthylène, les bitumes modifiés par des polymères acryliques élastomères, les bitumes modifiés par des copolymères éthylène/acétate de vinyle, et les compositions bitumineuses obtenues par mise en contact de bitume avec une solution mère contenant une coupe pétrolière ou une huile de houille, au moins un copolymère bloc styrène/butadiène et un agent réactif tel que le soufre.

9. Emulsions suivant l'une des revendications 1 à 8, caractérisées en ce qu'elles renferment, en poids, 30 à 80%, et de préférence 55 à 75%, du liant bitumineux bitume-polymère.

10. Emulsions suivant l'une des revendications 1 à 9, caractérisées en ce que l'acide carboxylique est choisi dans le groupe formé par les acides citrique, maléique, oxalique, succinique, phtaliques, tartrique.

11. Procédé pour la préparation des émulsions cationiques suivant l'une des revendications 1 à 10, caractérisé en ce qu'on amène, simultanément et séparément, à une zone de formation d'émulsion, notamment à un émulsionneur, d'une part le liant bitumineux bitume-polymère sous la forme d'une masse fondue ayant une température comprise entre 80°C et 180°C, et de préférence 120°C et 160°C, et d'autre part une solution du carboxylate de l'agent émulsifiant renfermant suffisamment d'acide libre pour présenter un pH compris entre 1 et 7 et ayant une température comprise entre 15°C et 80°C, et de préférence entre

20°C et 60°C, et que l'on maintient l'ensemble dans ladite zone pendant un temps suffisant pour former une émulsion.

**Patentansprüche**

1. Kationische Emulsionen aus bituminösen Bindemitteln vom Typ bestehend aus einer organischen Phase, gebildet aus einem in der wäßrigen Phase dispergierten bituminösen Bindemittel, wobei die wäßrige Phase einen kationischen Emulgator und eine Säure enthält, dadurch gekennzeichnet, daß das bituminöse Bindemittel ein Bindemittel vom Bitumen-Polymer-Typ ist und daß die in der wäßrigen Phase anwesende Säure eine gegebenenfalls hydroxylierte Polycarboxylsäure ist, die in einer solchen Menge verwendet wird, daß der pH-Wert der wäßrigen Phase zwischen 1 und 7 liegt.

2. Emulsionen nach Anspruch 1, dadurch gekennzeichnet, daß die Carbonsäure ausgewählt ist aus der Gruppe der gesättigten oder ungesättigten und gegebenenfalls hydroxylierten Polycarbonsäuren, der aliphatischen Säuren mit 2 bis 20, vorzugsweise 2 bis 12 C-Atomen, der alicyclischen Säuren mit 5 bis 12 C-Atomen oder der aromatischen Säuren mit 8 bis 12 C-Atomen.

3. Emulsionen nach Anspruch 2, dadurch gekennzeichnet, daß die Carbonsäure eine gegebenenfalls hydroxylierte Di- oder Tricarbonsäure ist.

4. Emulsionen nach einem der Ansprüche 1 bis 3, dadurch gekennzeichnet, daß der Emulgator ausgewählt ist aus der Gruppe der aliphatischen Amine, der Imide, der Alcoylamidoamine und der Imidazoline.

5. Emulsionen nach Anspruch 4, dadurch gekennzeichnet, daß der kationische Emulgator die allgemeine Formel

$$R—NH\!+\!CH_mH_{2m}—NH\!+_p\!+\!C_nH_{2n}\!+\!NH_2$$

oder die allgemeine Formel

$$R—CONH\!+\!C_mH_{2m}—NH\!+_p\!+\!C_nH_{2n}\!+\!NH_2$$

hat, worin R ein aliphatischer Rest mit 1 bis 20, vorzugsweise mit 8 bis 20 C-Atomen ist, m und n ganze Zahlen von 1 bis 8, vorzugsweise von 1 bis 6 sind und p eine ganze Zahl von 0 bis 6, vorzugsweise von 0 bis 3 ist.

6. Emulsionen nach einem der Ansprüche 1 bis 5, dadurch gekennzeichnet, daß die Menge an Emulgator 0,03 bis 0,6% des Gewichts der Emulsion beträgt.

7. Emulsionen nach einem der Ansprüche 1 bis 6, dadurch gekennzeichnet, daß das bituminöse Bitumen-Polymer-Bindemittel ausgewählt ist aus den Bitumen, denen Polymere beigemischt sind und die gegebenenfalls von diesen modifiziert werden in Anwesenheit oder Abwesenheit eines Reagens, insbesondere Schwefel, eines Kopplungs- oder Vulkanisationsmittels und gegebenenfalls eines Zusatzes wie z.B. Erdölfraktion oder Steinkohleöl.

8. Emulsionen nach Anspruch 7, dadurch gekennzeichnet, daß das bituminöse Bitumen-Polymer-Bindemittel ausgewählt ist aus der Gruppe bestehend aus Bitumen, modifiziert durch olefinische Polymere oder durch Mischungen aus Fettsäuren und höheren, gegebenenfalls mit Elastomeren vernetzten Alkoholen, durch Norbornen modifizierten Bitumen, durch Dihalogenpolybutadiene, die den aufeinanderfolgenden Copolymeren und den covulkanisierbaren Elastomeren als Aufnahmestruktur dienen, modifizierten Bitumen, durch die Blockcopolymere Polystyrol/Polydien oder Polystyrol/carboxyliertes Polydien modifizierten Bitumen, durch Polyethylenwachse modifizierten Bitumen, durch Elastomere Acrylpolymere modifizierten Bitumen, durch Ethylen/Vinylacetat-Copolymere modifizierten Bitumen, und bituminösen Zusammensetzungen, die erhalten, wurden, indem man Bitumen mit einer Mutterlösung in Kontakt bringt, enthaltend eine Erdölfraktion oder ein Steinkohlenöl, wenigstens ein Blockcopolymer Styrol/Butadien und ein Reagens wie z.B. Schwefel.

9. Emulsionen nach einem der Ansprüche 1 bis 8, dadurch gekennzeichnet, daß sie 30 bis 80 Gew.-%, vorzugsweise 55 bis 75 Gew.-% eines bituminösen Bitumen-Polymer-Bindemittels enthalten.

10. Emulsionen nach einem der Ansprüche 1 bis 9, dadurch gekennzeichnet, daß die Carbonsäure, ausgewählt ist aus der Gruppe bestehend aus Zitronen-, Malein-, Oxal-, Phthal- und Weinsäure.

11. Verfahren zur Herstellung kationischer Emulsionen nach einem der Ansprüche 1 bis 10, dadurch gekennzeichnet, daß man gleichzeitig und getrennt einer Bildungszone der Emulsion, insbesondere dem Emulgator, einerseits das bituminöse Bitumen-Polymer-Bindemittel in Form einer geschmolzenen Masse mit einer Temperatur zwischen 80 und 180°C, vorzugsweise 120 und 160°C, und andererseits eine Carboxylatlösung des Emulgators, enthaltend genügend freie Säure, um einen pH-Wert zwischen 1 und 7 aufzuweisen, mit einer Temperatur zwischen 15 bis 80°C, vorzugsweise zwischen 20 und 60°C, zuführt, und daß man das Ganze für einen genügend langen Zeitraum in dieser Zone hält, um eine Emulsion zu bilden.

**Claims**

1. Cationic emulsions of bituminous binders of the type consisting of an organic phase formed of a

bituminous binder dispersed in an aqueous phase containing a cationic emulsifying agent and an acid and characterized in that the bituminous binder is a bitumen-polymer type binder and the acid present in the aqueous phase is a polycarboxylic acid optionally hydroxylated, said acid being used in an amount sufficient to provide an aqueous phase having a pH between 1 and 7.

2. Emulsions according to Claim 1, characterized in that the carboxylic acid is selected from the group consisting of saturated or unsaturated and optionally hydroxylated polycarboxylic acids of the $C_2$ to $C_{20}$ and preferably $C_2$ to $C_{12}$ aliphatic type, of the $C_5$ to $C_{12}$ alicyclic type or of the $C_8$ to $C_{12}$ aromatic type.

3. Emulsions according to Claim 2, characterized in that the carboxylic acid is a dicarboxylic acid or a tricarboxylic acid, said acid being optionally hydroxylated.

4. Emulsions according to any of Claims 1 to 3, characterized in that the emulsifying agent is selected from the group consisting of aliphatic amines, imides, alkylamidoamines and imidazolines.

5. Emulsions according to Claim 4, characterized in that the emulsifying agent is of the formula

$$R—NH—(C_mH_{2m}—NH)_p—(C_nH_{2n})—NH_2$$

or

$$R—CONH—(C_mH_{2m}—NH)_p—(C_nH_{2n})—NH_2,$$

in which R is a $C_1$ to $C_{20}$ and preferably $C_8$ to $C_{20}$ aliphatic radical, m and n are integers from 1 to 8 and p is an integer ranging from 0 to 6 and preferably from 0 to 3.

6. Emulsions according to any of Claims 1 to 5, characterized in that the quantity of emulsifying agent is 0.03 to 0.6% of the weight of the emulsion.

7. Emulsions according to any of Claims 1 to 6, characterized in that the bituminous binder of the bitumen-polymer type is selected from the group consisting of bitumen incorporating polymers and optionally modified by these polymers with or without the use of a reactive material such as sulfur, a coupling agent or a vulcanizing agent and of an additive such as a petroleum cut or a coal oil.

8. Emulsions according to Claim 7, characterized in that the bituminous binder of the bitumen-polymer type is selected from the group consisting of bitumens modified with olefinic polymers or with mixtures of fatty acids and higher alcohols and optionally grafted with elastomers, bitumens modified with norbornene, bitumens modified with dihalogenopolybutadienes acting as reception structures for block copolymers and for co-vulcanisable elastomers, bitumens modified with block copolymers of styrene with a diene or a carboxylated diene, bitumens modified with polyethylene waxes, bitumens modified with elastomeric acrylic polymers, bitumens modified with ethylene/vinyl acetate copolymers, and bituminous compositions obtained by contacting bitumen with a mother solution containing a petroleum cut or a coal oil, at least a styrene/butadiene block copolymer and a reactive agent such as sulfur.

9. Emulsions according to any of Claims 1 to 8, characterized in that they contain from 30 to 80% and preferably from 55 to 75% by weight of the bituminous binder.

10. Emulsions according to any of Claims 1 to 9, characterized in that the carboxylic acid is selected from the group consisting of citric acid, maleic acid, oxalic acid, succinic acid, phthalic acid, and tartaric acid.

11. Process for the preparation of cationic emulsions according to any of Claims 1 to 10, characterized in that it comprises introducing simultaneously and separately into an emulsion formation zone, the bituminous binder of the bitumen-polymer type in the form of a molten mass having a temperature between 80°C and 180°C and preferably between 120°C and 160°C and on the other hand a solution of the carboxylate of the emulsifying agent containing a sufficient amount of free carboxylic acid to provide a pH between 1 and 7 and having a temperature between 15°C and 80°C and preferably between 20°C and 60°C, and maintaining the whole in said emulsification zone for a sufficient length of time to form an emulsion.